(19) Europäisches Patentamt
European Patent Office
Office européen des brevets

(11) EP 4 456 418 A1

(12) **EUROPEAN PATENT APPLICATION**

(43) Date of publication:
**30.10.2024 Bulletin 2024/44**

(21) Application number: **23169639.4**

(22) Date of filing: **24.04.2023**

(51) International Patent Classification (IPC):
***H02S 50/15*** *(2014.01)*

(52) Cooperative Patent Classification (CPC):
**H02S 50/15**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Valstybinis Moksliniu Tyrimu Institutas Fiziniu Ir Technologijos Mokslu Centras**
**02300 Vilnius (LT)**

(72) Inventors:
- **PAULAUSKAS, Tadas**
  **02300 Vilnius (LT)**
- **KROTKUS, Arunas**
  **02300 Vilnius (LT)**
- **NORKUS, Ricardas**
  **02300 Vilnius (LT)**
- **NEVINSKAS, Ignas**
  **02300 Vilnius (LT)**

(74) Representative: **Draugeliene, Virgina Adolfina**
**Tarpine Ltd**
**A. P. Kavoliuko g. 24-152**
**04328 Vilnius (LT)**

(54) **METHOD AND DEVICE FOR CHARACTERIZATION OF PHOTOVOLTAIC SOLAR ELEMENTS**

(57) The invention pertains to the field of semiconductor device characterization and is applicable for studying the performance characteristics of various optoelectronic components, including both single-junction and multi-junction solar cells. The setup comprises a delay line for exciting the solar cell and a terahertz pulse detector, along with an optical measurement line that includes an optical parametric amplifier and the solar cell being tested. The delay line's optical fiber and the THz radiation beam are directed into the terahertz pulse detector, which sends the detected terahertz pulses to the data processing unit. To enhance the spectral range and improve the spectral accuracy of measurements, a constant voltage source is integrated. This voltage source permits the adjustment of voltage polarity and amplitude and is connected to the contacts of the solar cell being examined.

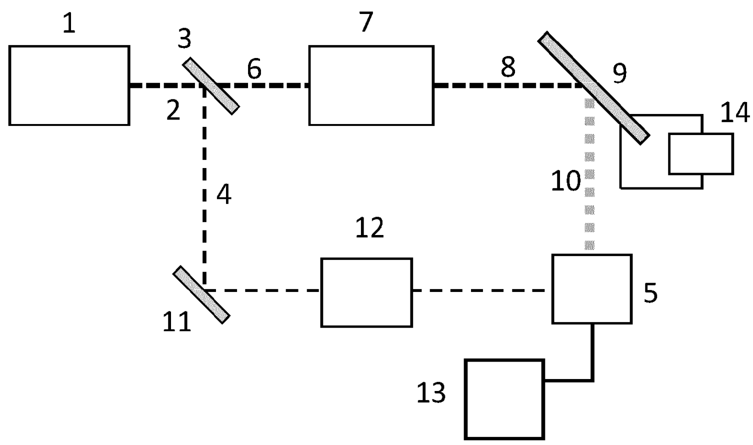


Fig. 2

EP 4 456 418 A1

## Description

### TECHNICAL FIELD OF THE INVENTION

This invention belongs to the field of characteristics measurements of semiconducting optoelectronic devices, and it can be applied to investigate the operational characteristics of diverse optoelectronic components, including multi-junction photovoltaic cells.

### BACKGROUND OF THE INVENTION

Typically, the semiconducting optoelectronic devices' characteristics are determined from the electric signal between contacts induced by a light beam of various wavelengths. However, this and similar measurement approaches that require the creation of the electrical contacts to the investigated sample are not suitable for characterizing optoelectronic devices that are monolithically integrated into a single chip, such as multi-junction solar cells (MJSC). This is because standard methods cannot illuminate the inner layers due to the absorption in the upper layers, and there is no practical way to place electrical contacts on the inner layers. These difficulties can be circumvented by employing several different wavelength light sources.

One such method and corresponding equipment for MJSC characterization is described in (S. W. Lim et al, "Analysis of spectral photocurrent response from multi-junction solar cells under variable voltage bias", 2010 35th IEEE Photovoltaic Specialists Conference, pp. 000712-000716, DOI: 10.1109/PVSC.2010.5617046*)*. The equipment was used to measure the external quantum efficiency spectra of a triple junction InGaP/InGaAs/Ge solar cell. The cell was illuminated with three different colour light beams at once. Two high intensity laser beams (red and blue) effectively excited InGaP and Ge p-n junctions and led to the net photocurrent be limited by the InGaAs junction, which was illuminated with a lower intensity xenon lamp through a monochromator. The monochromatic beam was mechanically modulated and the photocurrent was registered with a lock-in amplifier. Under these experimental conditions, the sandwiched InGaAs junction's characteristics were measured. To perform this measurement on the other two p-n junctions it is necessary to select appropriate light sources that correspond to their optical absorption ranges and are of sufficient intensity.

The drawback of this characterization method is that light bias intensity of each junction needs to be carefully determined to avoid erroneous results. For example, measurement results can be influenced by the luminescence excited in the saturated junctions that have higher energy bandgaps than the target p-n junction. In addition, placement of contacts and simultaneous voltage bias is typically required for MJSC devices that exceed two p-n junctions. Incorrect voltage bias can also lead to measurement artefacts that are difficult to predict. Additional analyses and mathematical procedures are generally required to attempt a full characterization thus requiring highly specialized skillsets and increased device development cycle time.

Electrical and optical characteristics of semiconductors and semiconducting devices can be investigated without electrical contacts by taking advantage of the short terahertz (THz) radiation pulses. USA patent US 9,450,536 B2 (2016. 09. 20) describes a characterization method of semiconducting optoelectronic devices and an apparatus employing these pulses. The apparatus consists of three parts; a pulsed laser capable of generating three different wavelengths optical pulses used to excite an MJSC, an optical delay necessary to temporally separate the THz radiation signals generated by different wavelength laser pulses, and a part that detects and analyses the THz pulses. The method is based on the effect of THz radiation transient generation in semiconductors excited by short optical pulses. Different wavelength light is absorbed in different MJSC layers, and because of this absorption the photoexcited electron-hole pairs are spatially separated by the built-in electric fields of those respective layers. This spatial charge separation is the main cause of the radiated THz pulses. From the THz pulse amplitude one can estimate the intensity of built-in electric fields in individual MJSC device junctions. By scanning MJSC surface with a focused optical beam and generating THz pulses, it is also possible to estimate the material defects and morphological changes in different device locations and depths that can cause non-radiative carrier recombination and built-in electric field deterioration.

The mentioned patent proposes several experimental setups that can realize this characterization method. In the first of one, the main source of optical pulses is a femtosecond laser; in addition to the first harmonic laser pulses, the pulses of the second and third harmonics, which are obtained by passing the main laser pulse through respective nonlinear optical crystals, are used. The second and third harmonics pulses are delayed with respect to the main harmonic pulse so that the detector can record each of the generated THz transient's amplitudes separately.

Both of these options are difficult to implement. The solar spectrum covers a wide range of wavelengths, from approximately 300 nm to 1600 nm. The largest contribution to the generation of electron-hole pairs in the MJSC occurs in a narrower range where the highest concentration of photons is found. By examining the distribution of photons with different energies in the AM0 spectrum of the Sun, we can observe that the most technically useful section of this spectrum lies between 1 eV and 3 eV photon energy range.

In the mentioned US patent, the Ti:sapphire laser, which is the most commonly used femtosecond laser, cannot be employed due to its quantum energy of approximately 1.5 eV. Consequently, the energy of triple-frequency photons generated by this laser would reach 4.5 eV, which falls outside the relevant part of the spectrum for solar energy applications. Another common drawback of the proposed method and device implementations is their utilization of a sequence of multiple optical pulses, with distances between pulses exceeding the duration of THz pulse generation. The size of the latter pulse is about 1 ps, whereas the lifetimes of charge carriers in solar cells typically span several orders of magnitude longer. Consequently, unrecombined electrons will absorb THz pulses and distort the measurement results.

The device that closely aligns with the intended technical purpose is described in the German patent DE 10 2010 056 098 B3. This patent details a method for characterizing the parameters of semiconductor derivatives using THz radiation. Alongside the femtosecond laser, the optical pulse generation component incorporates an optical parametric oscillator, enabling the selection of pulse wavelengths from a wide range of light wavelengths. The device also includes components for splitting light rays to generate and detect THz pulses, as well as recording the measurement results.The known technical solution involves a device that determines the boundary parameters of two different material layers. However, the existing characterization methods for solar cells do not offer technical solutions for identifying the most crucial performance parameters of these devices, namely, the short-circuit current ($J_{sc}$), open-circuit voltage ($V_{oc}$), external quantum efficiency (EQE), and its spectrum.

The method that closely aligns with the intended technical method, as described in the German patent DE102010 056098 B3, aims to characterize the parameters of semiconductor parameters at the interface area of two different materials using THz radiation.

The known method comprises the following steps:

- determining of the emission wavelength ($\lambda$) of the laser system, which can be adjusted within a predetermined range of wavelengths, preferably in the femtosecond range.

- Irradiating of the investigated semiconductor structure, composed of two different materials, with laser pulses of a specified wavelength.

- detecting of terahertz pulses (THz) emitted by the structure under investigation due to the interaction with the laser radiation and evaluating of the internal fields in the studied structure based on the amplitude of the THz pulses.

By following these steps, the method enables the assessment and characterization of the internal fields within the semiconductor structure, specifically at the interface between the two different materials. In the known device and method, all measurements are conducted without any direct connection to the contacts of the solar cells. Consequently, the light-induced electrons and holes within the cells become separated by the internal electric fields, effectively charging them like capacitors. This process unavoidably alters the initial configuration of the electric fields in the tested device. The size of these electric fields within the different layers comprising the device becomes crucial and is probed using light pulses of varying wavelengths. THz radiation pulses are generated to examine the influence of different parts of the device on the size of these fields. The intensity of the THz pulses determines the parameter values of the solar cell, as well as the impact of various components of the device on the field sizes.

## TECHNICAL PROBLEM TO BE SOLVED

This invention aims to expand the spectral range of measurements, increase the spectral accuracy of measurements, as well as expand the possibilities of use by measuring semiconductor structures consisting of many layers.

## ESSENCE OF THE INVENTION

The essence of the solution according to the propose invention is that in a method for characterizing photovoltaic solar cells, comprising:

- setting radiation parameters of a laser system within a predetermined range of wavelengths, preferably in a femtosecond range,

- irradiating the tested solar cell with laser pulse radiation from at least two layers of different materials, using the parameters determined in the previous step,

- detecting and evaluating terahertz pulses (THz) emitted by the irradiated solar cell, wherein the irradiation of the solar cell under test is carried out with the contacts of the solar cell under test connected to a constant voltage source with the possibility of adjusting the voltage polarity and amplitude of this source, and comprising:

    - setting a voltage of the connected voltage source to V=0,

    - measuring an amplitude of the THz pulses at various moments of time and determining the shape of the THz photocurrent pulse from the amplitude dependence on time integration in the computer of the data processing unit,

    - determining of recombination and extraction durations of charge carriers from the photocurrent pulse shape,

- determining of a spectral sensitivity of the solar cell based on the amplitude of the THz photocurrent pulses by changing the wavelength of the optical pulse;

- setting a voltage of the connected voltage source to V>0.

  - measuring of an amplitude of the THz pulses at different voltages (V>0).

  - determining an open circuit voltage of the solar cell from a value of V at which the THz generation disappears.

The essence of the solution according to a proposed device is that in a device for measuring the characteristics of photovoltaic solar cells, comprising a femtosecond laser, a laser beam splitting means for dividing the path of the laser beam into parts passing through:

- an optical delay line for the exciting of the solar cell and a terahertz pulse detector, and

- an optical measuring line, in the optical path of which there is an optical parametric amplifier and a test solar cell, and

  a terahertz pulse detector into which the optical beam of the delay line and a THz radiation beam reflected from the tested solar cell enter, wherein the output of the detector is connected to the data processing unit, wherein

  a constant voltage source is provided with the ability to adjust the voltage polarity and amplitude of this source, which is connected to the contacts of the tested solar cell.

Furthermore, the device incorporates a constant voltage source that enables adjustment of voltage polarity and amplitude. This voltage source is connected to the contacts of the solar cell under test.

Overall, this embodiment of the invention presents a photovoltaic solar cell performance measuring device equipped with a femtosecond laser, optical components, a terahertz pulse detector, and a constant voltage source for accurate measurement and analysis of solar cell performance.

The essence of the problem solution lies in utilizing terahertz frequency electromagnetic radiation pulses (referred to as THz pulses) emitted from semiconductors and semiconductor surfaces when illuminated by femtosecond laser pulses. In this text, THz pulses will be referred to as pulsed electromagnetic radiation, covering a frequency spectrum ranging from 300 GHz to 3 THz. Additionally, femtosecond pulses, with durations shorter than 150 fs, will be referred to as light pulses.

The primary cause of this emission is the photocurrent generated when the laser pulse excites electrons and holes, leading to their spatial separation due to the electric field present in the material. The photocurrent exhibits a growth time comparable to the duration of the optical pulse, and its temporal decay is influenced by various rapid physical processes such as relaxation of excited hot electrons, extraction of charge carriers into the solar cell contacts, and recombination of these charge carriers. Given the fast nature of these processes, particularly the rapid growth of the photocurrent, it gives rise to high-frequency electromagnetic radiation that is emitted from the studied structure and propagates through free space as light. The electric field amplitude E(t) of the THz pulses is directly proportional to the time derivative of the photocurrent.

$$E_{THz}(t) \sim {dJ_{THz}(t)}/{dt}.$$

The detection and recording of THz pulses do not require electrical contacts, which could otherwise significantly complicate measurements, especially for complex multilayer semiconductor structures. Moreover, when optical pulses of different wavelengths are employed, they are absorbed by layers with corresponding absorption edge energies lower than the photon energy hv of the optical pulses. This allows for reaching deeper layers within the structure. By varying hv, THz pulses can be successively generated in different layers, enabling the determination of each layer's contribution to the solar cell's photocurrent based on its size and shape, as well as parameters describing light absorption, external quantum efficiency (EQE), and charge carrier dynamics.

The proposed solution differs from existing methods in several aspects. Notably, the measurement results of solar cells using THz pulses depend on whether the cell is connected to an electrical circuit or not. In previous approaches, the photoexcited electrons and holes are separated by the internal electric field in the solar cell and accumulate in opposite contacts, causing significant alterations to the internal electric field. The recovery time of this field is longer than the pulse train period of most femtosecond light sources. For instance, when illuminating a triple-junction (GaAsBi-GaAs-AlGaAs) solar cell with optical pulses of various wavelengths, each lasting 150 fs, with an average power of 5 mW and a repetition rate of 200 kHz generated by an optical parametric amplifier (OPS), the contacts of the cell generate a constant voltage from a 0.4 V up to 0.8 V. In order to control this process, our proposed invention incorporates a constant voltage source connected to the solar cell under study. By adjusting the polarity and amplitude of this source signal, the short-circuit currents and open-circuit voltages can be measured separately for each region of the solar cell within the resulting electrical circuit by analyzing THz pulses at various applied forward bias voltages.

Finally, in the proposed solution, the parameters of the solar cell will be determined not solely from the THz pulses, but rather from the amplitude and shape of the photocurrent pulses. The dynamics of the photocurrent ($J_{THz}$) obtained by integrating the field amplitude of the THz pulses provides not only information about the photoresponse of the solar cell but also valuable insights into the transfer of photoexcited electrons and holes to the contacts, as well as their recombination. This information is crucial for understanding and optimizing the performance characteristics of solar cells. Analyzing the shape of $J_{THz}(t)$ enables the assessment of the relative contributions of various processes, including electron drift speed, charge carrier extraction to the contacts, and recombination. This analysis plays a significant role in evaluating the device's performance characteristics.

## ADVANTAGES OF THE INVENTION

The spectral response of the solar cell under investigation is determined by measuring the shape of THz pulses generated in the test device, which is illuminated by optical parametric amplifier (OPS) pulses of various wavelengths and supplied with different magnitudes of constant voltage. The collected data can be analyzed by integrating the shape of the THz pulses over time using computer simulations of charge carrier dynamics and THz generation. The OPS allows for precise control of the pulse wavelength within a wide spectral range, thereby expanding the capability to determine the spectral characteristics of the solar cell and enhancing the measurement accuracy.

By applying zero voltage to the device contacts and varying the wavelength of the light pulses, the short-circuit current can be determined in single-junction solar cells, or the photocurrent produced by individual layers in multi-junction solar cells can be measured. The open-circuit voltage values of the solar cells can be determined by measuring the dependence of the THz photocurrent pulse amplitude on the magnitude of the constant forward bias voltage and exciting the cell with optical pulses corresponding to the absorption regions of the layers.

Additionally, by examining the temporal dynamics of THz current pulses generated in different regions of the device, valuable information about charge collection efficiency and other dynamic processes can be obtained.

The proposed invention offers an effective solution to enhance the accuracy of spectral measurements and enables the development of a user-friendly device for evaluating the performance characteristics of diverse photovoltaic solar cells, including multi-junction cells. The parameters that can be determined or inferred through data analysis using this approach encompass the spectra of THz induced photocurrents, electron-hole separation efficiency, open-circuit voltages, as well as the extraction of charge carriers to the contacts and their lifetimes in each junction of the solar cell. This comprehensive set of parameters facilitates a thorough analysis of the solar cell's performance.

## BRIEF DESCRIPTION OF THE DRAWINGS

The scope of the invention is not limited by the presented drawings.

Fig.1 illustrates the sequence of actions involved in the proposed method.

Fig.2 depicts the block diagram of the proposed device.

Fig.3 showcases the temporal variations of the amplitudes of the terahertz pulse generated on the surface of the InAs crystal (dotted line) and the photocurrent pulse (continuous line).

Fig.4 presents the same information as Figure 3, but measured in a p-i-n junction solar cell made of GaAs-Bi.

Fig.5 displays the photocurrent pulses in single-junction GaAsBi solar cells with shorted (solid line) and non-shorted (dotted) contacts.

Fig.6 exhibits the dependence of the duration of pulses generated by the optical parametric amplifier on the radiation wavelength.

Fig.7 illustrates the structure of a three-junction solar cell.

Fig.8 showcases the THz photocurrent spectra measured in solar cells made of GaAs (S1) and $Al_{0.33}Ga_{0.67}As$ (S2). The results are normalized to a constant number of photons in optical pulses of various wavelengths.

Fig. 9 presents the amplitude spectrum of short-circuit current pulses of a three-junction solar cell, measured with 5 mW average power femtosecond optical pulses and normalized to a constant number of photons per pulse.

Fig. 10 illustrates the dependence of the photocurrent pulse amplitude of a GaAsBi solar cell on the magnitude of the constant voltage applied to the diodes, normalized to a constant number of photons in the light pulse.

Fig.11 displays the relationship between the amplitude of the GaAs solar cell photocurrent pulses and the magnitude of the constant voltage applied to the diodes, normalized to a constant number of photons in the light pulse.

Fig.12 depicts the dependency of the amplitude of the photocurrent pulses in a three-junction solar cell on the applied constant voltage, measured using light pulses of different wavelengths and normalized to a constant number of photons in the pulse.

Fig.13 showcases the shape of the photocurrent pulses in a GaAsBi solar cell excited by two pulses of different wavelengths.

Fig.14 presents the shape of the photocurrent pulses in a GaAs solar cell excited by pulses with a wavelength of 840 nm.

EXAMPLES OF REALIZATION OF THE INVENTION

The sequence of actions in the proposed method is illustrated in Fig.1. The study begins with the selection of desired parameters for the optical pulse (wavelength and average intensity) and the conditions for connecting the test sample to the electrical circuit. Subsequently, the THz pulses are detected, and their shape is determined by gating their amplitude in time. To determine the open-circuit voltage of the MJSC and the contribution of individual junctions to its magnitude, the amplitude of THz pulses is measured by varying the applied forward voltage and exciting the pulses with light pulses of different wavelengths. The spectral dependencies of photocurrents in individual junctions are determined by integrating the THz pulse shape over time. Finally, the shape of the current pulses can be utilized to identify the underlying physical processes that influence charge carrier dynamics in individual MJSC layers.

The proposed device, as shown in Figure 2, comprises a femtosecond laser (1) that generates light pulses (2). The light pulse beam (2) is divided into two parts using a semi-transparent mirror (3). The first part (4), with lower intensity, is utilized to activate the THz radiation pulse detector (5), while the second part (6), with higher intensity, enters the optical parametric amplifier (OPS) (7). The OPS (7) produces light pulses (8) with adjustable wavelength and femtosecond duration, which are employed to excite the test device (9) connected to a constant voltage source (14). The light pulses (8) enter the test device (9) at a 45° angle, and a detector (5) placed in the reflection path registers the THz radiation pulses (10) generated through the absorption of the femtosecond light pulses in the test device (9). The detector (5) can be a photoconductive antenna made of a semiconductor that is sensitive to the wavelength of the fiber (4) with charge carrier lifetimes shorter than 1 ps, or an electro-optical Pockels' cell and a crystal exhibiting the Pockels effect. The first part of the beam (4) is directed to the detector (5) via the mirror (11) and the delay line (12). The detector signal is recorded in the data processing unit (13).

The absorption of the beam (8) radiation occurs in different regions of the investigated optoelectronic device (9) based on the wavelength of the beam (8). Specifically, it is absorbed in areas where the energy gap between the material's band edges is smaller than the energy of the pulsed photons in the beam (8). If there exists an internal electric field in the corresponding region, the unbalanced charge carriers generated during light absorption will result in a rapidly changing photocurrent pulse J(t). This photocurrent induces electromagnetic signals, including THz radiation. A radiation pulse is generated with characteristic frequencies in the THz range, allowing it to propagate quasi-optically in space. Its amplitude is proportional to the time derivative of the photocurrent, represented as $E_{THz}$~dJ(t)/dt.

Figure 3 illustrates the $E_{THz}$ shape of the emitted THz pulse and the time variations of the photocurrent J when a simple semiconductor surface is photoexcited. Figure 4 demonstrates the same for a solar cell structure. As observed in these figures, the amplitude of the THz pulse reaches its maximum during the optical pulse's duration when the time variation of the photocurrent is at its largest. Additionally, this amplitude is influenced by the duration of the optical pulse. The position of the maximum amplitude of J in time corresponds to the duration of the THz pulse (10), and its value, determined by time integration of $E_{THz}(t)$, is less dependent on the optical pulse's duration.

The photocurrent generated by illuminating the investigated structure with radiation pulses of different wavelengths depends on the absorption coefficient and the strength of the internal electric field. Its temporal variation is influenced by the structural properties of the material, which impact the charge carrier transfer to the contacts and recombination at specific locations within the device structure. These phenomena can be observed from Fig.4, which depicts the amplitude decrease of the J(t) pulse. In contrast, Fig.3 represents the shape of the photocurrent pulse generated by n-InAs, exhibiting differences from the results obtained for the solar cell derivative. In this case, the amplitude decrease of the J(t) pulse is predominantly determined by the plasma oscillations characteristic of InAs and other narrow-gap semiconductors with high electron mobilities.

Fig.5 demonstrates another notable characteristic of THz photocurrent pulses generated when solar cells are illuminated with femtosecond laser pulses. It highlights the significant dependence of their amplitude on the switching conditions of the solar cell into the electrical circuit. The amplitude of the photocurrent is reduced by nearly half due to changes in the internal electrical current caused by the accumulation of non-recombined electrons at the electrical contacts of the cells. This effect varies significantly across different locations within the MJSC and in different parts of the spectrum, which can lead to significant distortions in the measurement results of solar cell characteristics.

It should be emphasized that the charging of the solar cell contacts was also determined by measuring the constant voltage present on them. Even with a relatively low excitation of approximately 5 mW average power from the 200 kHz repetition rate femtosecond optical pulses, a constant voltage of 0.3-0.6 V was observed. The remaining illustrations in the figures represent the results obtained from studying one of the potential implementations of the device and will be further described in the subsequent section.

To implement the invention, a device based on an enhanced yttrium-doped potassium and gadolinium tungstate Yb:KGW laser (PHAROS, Light conversion) was developed. This laser generated pulses with a wavelength of 1030 nm, duration of 160 fs, and a repetition rate of 200 kHz. The laser beam 2 was directed towards an optical parametric amplifier (OPS) 7 (ORPHEUS, Light conversion), which converted it to generate femtosecond optical pulses with wavelengths ranging from 640 nm to 2600 nm. Shorter pulses with a wavelength of 400 nm were obtained by generating second harmonic pulses in a beta barium borate (BBO) crystal.

The optical pulses were directed at an angle of 45° towards the test specimen 9, and the resulting THz radiation pulse 10 was observed in the reflection direction using a GaAsBi photoconductive antenna (UAB Teravil). The photoconductive antenna was activated by a portion of the Yb:KGW laser beam 4, which illuminated the detector 5 after passing through a variable-length delay line 11.

Fig.6 illustrates the pulse duration of various wavelengths generated by the OPS, as determined by second harmonic autocorrelation. This illustration demonstrates that this parameter remains relatively consistent across the entire range, with larger changes observed only at wavelengths around 1000 nm, where the signal transitions to side waves generated by the OPS.

Four device characteristics were measured, including three single-junction solar cells with active absorption layers made of different materials: GaAs, GaAlAs, and GaAsBi, as well as a three-junction photovoltaic cell consisting of GaAsBi, GaAs, and AlGaAs. All of these samples were grown using Veeco molecular fiber epitaxy on GaAs substrates.

The GaAs diode had an active absorption region thickness of 2000 nm. The absorption region thickness of the AlGaAs diode was 450 nm, with an Al proportion of 33% in the AlGaAs compound. The third diode had a GaAsBi i-layer with a thickness of 500 nm (containing 4% Bi) sandwiched between the contact n-type and p-type GaAs layers. The layer structure of the investigated three-junction solar cell is shown in Fig.7.

The measurement results for the GaAs and AlGaAs solar cells are presented in Fig.8. During the measurement, the samples were illuminated with an average power of 6 mW using an S-polarized beam incident at a 45° angle to the sample surface. In all three cases, the emission of THz pulses occurred when the energy of the photons from the optical pulse exceeded the bandgap energy of the material in the active region of the device. The THz pulse amplitudes shown in Fig.8 are normalized to a constant number of photons, enabling accurate comparison among different samples.

The results of the tests conducted on the three-junction solar cell are illustrated in Fig.9. The empty points represent the measurements of THz photocurrent pulse amplitudes, while the solid points indicate the measurement results normalized to the spectrum of the Sun's radiation in free space (AM0 - Air Mass Zero). This image clearly displays the absorption bands of all three components of the solar cell and the distinct differences in photocurrent amplitudes. It is evident that the highest photocurrent is generated in the AlGaAs subcell. This outcome aligns with the measurements of external quantum efficiency (EQE) and the simulation results of MJSC reflection spectra.

When adjusting the voltage connected to the contacts of a single-junction solar cell, the dependencies shown in Fig.10 and Fig.11 emerge. For voltages $V < 0$, the electric field created by the voltage combines with the internal field of the junction, leading to a linear increase in the amplitude of the generated THz pulses. Conversely, for $V > 0$, the electric field within the structure diminishes, resulting in a decrease in the amplitude of the THz pulses. This decrease continues until the external voltage reaches the value of the open circuit voltage ($V_{oc}$) of the solar cell, at which point the internal electric field within the junction ceases to exist. The diminished THz emission observed at even higher voltages is attributed to the uneven diffusion of electrons and holes from the excited surface (photo-Dember effect). Fig.10 demonstrates the dependencies obtained from studying a GaAsBi solar cell, where the $V_{oc}$ value was measured as 0.8 V. The same dependencies were observed in solar cells made of GaAs, with a $V_{oc}$ value of 1.1 V in this particular case.

Fig.12 presents the outcomes of similar measurements conducted on a triple-junction solar cell. In this case, selective excitation was applied to all three subcells of the device: the AlGaAs section, the GaAs section at 840 nm, and the GaAsBi subcells at 960 nm were excited using 640 nm radiation pulses. It is evident that the curves obtained from the subcells closely resemble the results corresponding to AlGaAs photoexcitation. This can be attributed to the fact that the largest drop in the applied voltage corresponds to this specific subcell, where the internal potential difference is the greatest. The steeper decay of the photocurrent terminates at approximately 2 V, which corresponds to the $V_{oc}$ of the solar cell. Photocurrents generated in the GaAs and GaAsBi subcells begin to decline only when the internal electric field of the AlGaAs subcell is fully compensated.

Further insights into the dynamics of electrons and holes within different regions of the solar cell structure can be obtained by analyzing the THz current pulses generated when the cell is excited with light pulses of varying wavelengths. To illustrate this, Fig.13 and Fig.14 showcase the photocurrent pulses obtained by integrating THz pulses emitted from GaAsBi and GaAs solar cells, respectively. In the first case, measurements were conducted by illuminating the GaAsBi subcell with two light beams of different wavelengths. It can be observed that the relaxation of the photocurrent is faster when longer-wavelength light is used for illumination. This is because, in such instances, the charge carriers are uniformly excited throughout the thickness of the absorbing layer, resulting in their swifter extraction to the contacts. Three distinct stages can be discerned in the decay of the current over time for GaAs. The initial stage, lasting less than 2 ps, is attributed to the termination of the drift velocity surge and is associated with the decrease in electron velocity during the relaxation of their energy. The subsequent two stages correspond to the transfer of electrons to the contacts (within approximately 4 ps from excitation) and the second stage, concluding at around 9 ps, corresponds to the transfer of holes with a saturation velocity more than three times lower. This outcome indicates the high quality of the GaAs layer structure. If there were numerous defects in the layer, the current relaxation would follow a simple exponential pattern.

## Claims

**1.** A method for characterizing photovoltaic solar cells, comprising:

- setting radiation parameters of a laser system within a predetermined range of wavelengths, preferably in a femtosecond range.
- irradiating with laser pulse radiation the solar cell from at least two layers of different materials, using the parameters determined in the previous step.
- detecting and evaluating terahertz pulses (THz) emitted by the irradiated solar cell,

**characterized in that**
the irradiation of the solar cell under test is carried out with the contacts of the solar cell under test connected to a constant voltage source with the possibility of adjusting the voltage polarity and amplitude of this source, and comprising:

- setting a voltage of the connected voltage source to V=0,

    - measuring an amplitude of the THz pulses at various moments of time and determining the shape of the THz photocurrent pulse from the amplitude dependence on time integration in the computer of the data processing unit,
    - determining of recombination and extraction durations of charge carriers from the photocurrent pulse shape,
    - determining of a spectral sensitivity of the solar cell based on the amplitude of the THz photocurrent pulses by changing the wavelength of the optical pulse;

- setting a voltage of the connected voltage source to V>0.

    - measuring of an amplitude of the THz pulses at different voltages (V>0).
    - determining an open circuit voltage of the solar cell from a value of V at which the THz generation disappears.

**2.** A device for measuring the characteristics of photovoltaic solar cells, comprising a femtosecond laser (1), a laser beam splitting means (3) for dividing the path of the laser beam into parts passing through:

- an optical delay line (4) for the exciting of the solar cell and a terahertz pulse detector, and
- an optical measuring line (6), in the optical path of which there is an optical parametric amplifier (7) and a test solar cell (9),

and

a terahertz pulse detector (5) into which the optical beam of the delay line (4) and a THz radiation beam (10) reflected from the tested solar cell (9) enter, wherein the output of the detector (5) is connected to the data processing unit (13),
**characterized in that**
a constant voltage source is provided with the ability to adjust the voltage polarity and amplitude of this source, which is connected to the contacts of the tested solar cell (9).

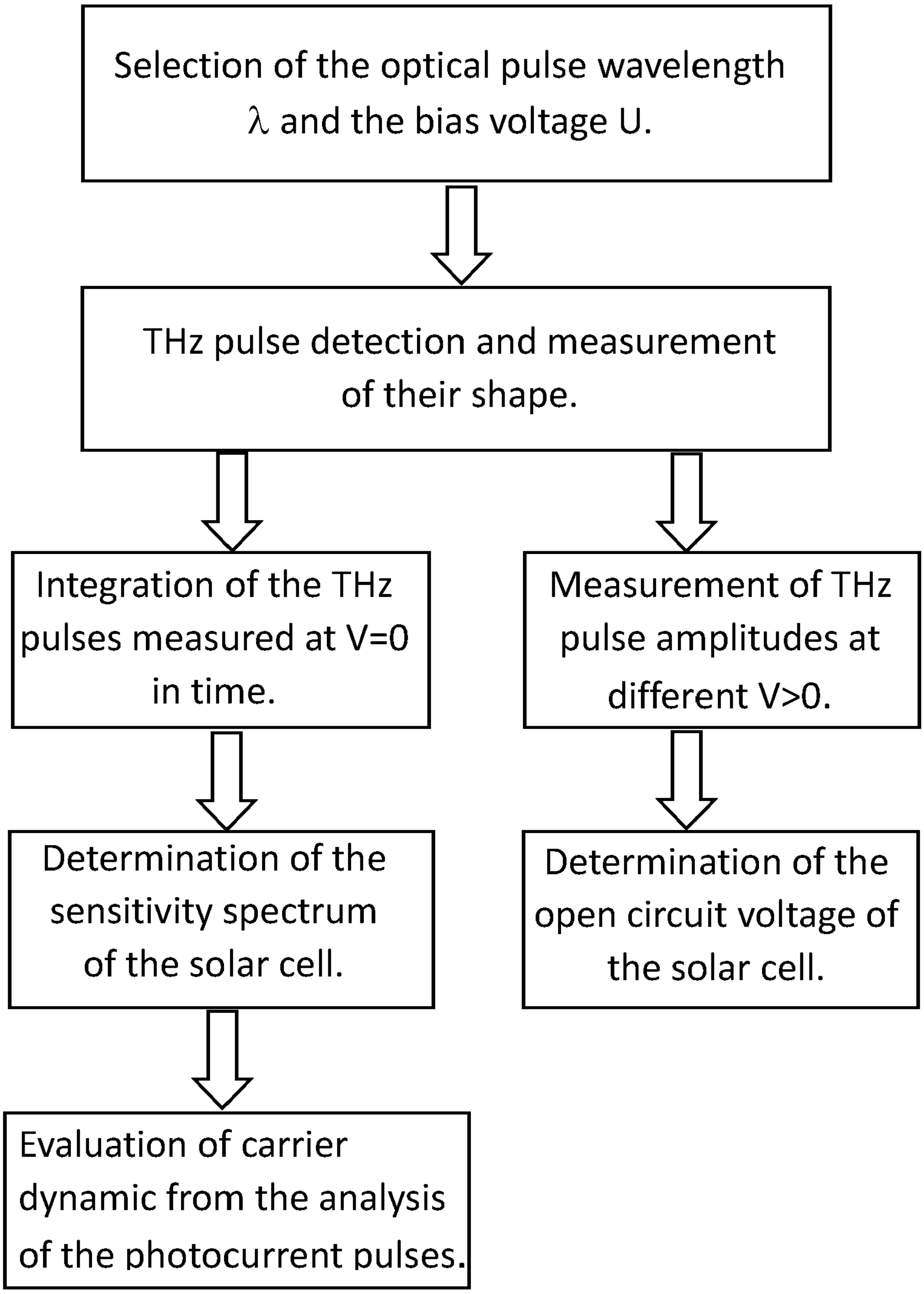
Selection of the optical pulse wavelength λ and the bias voltage U.
THz pulse detection and measurement of their shape.
Integration of the THz pulses measured at V=0 in time.
Measurement of THz pulse amplitudes at different V>0.
Determination of the sensitivity spectrum of the solar cell.
Determination of the open circuit voltage of the solar cell.
Evaluation of carrier dynamic from the analysis of the photocurrent pulses.

Fig. 1

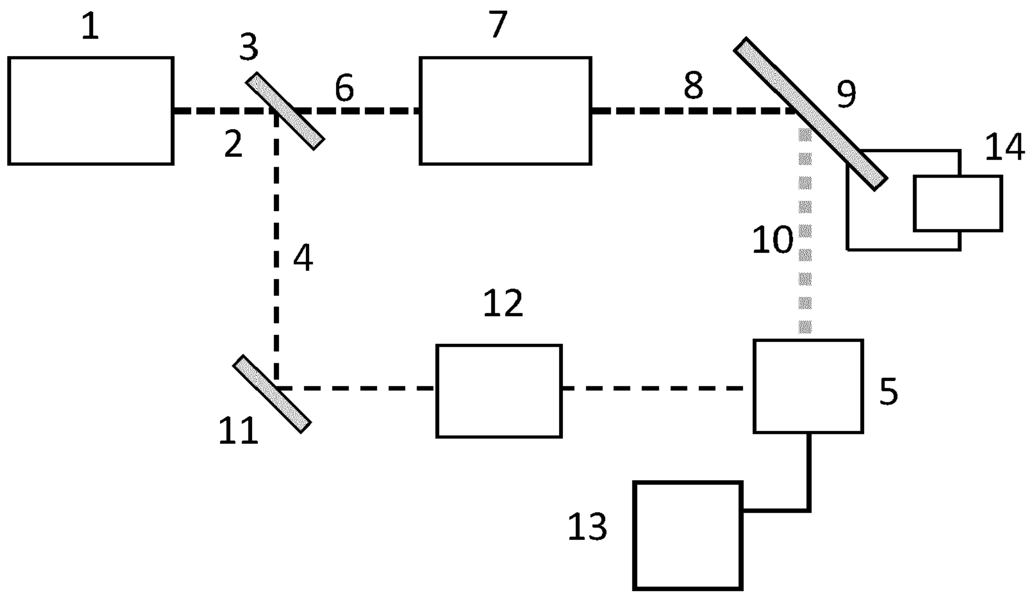
1
2
3
4
5
6
7
8
9
10
11
12
13
14

Fig. 2

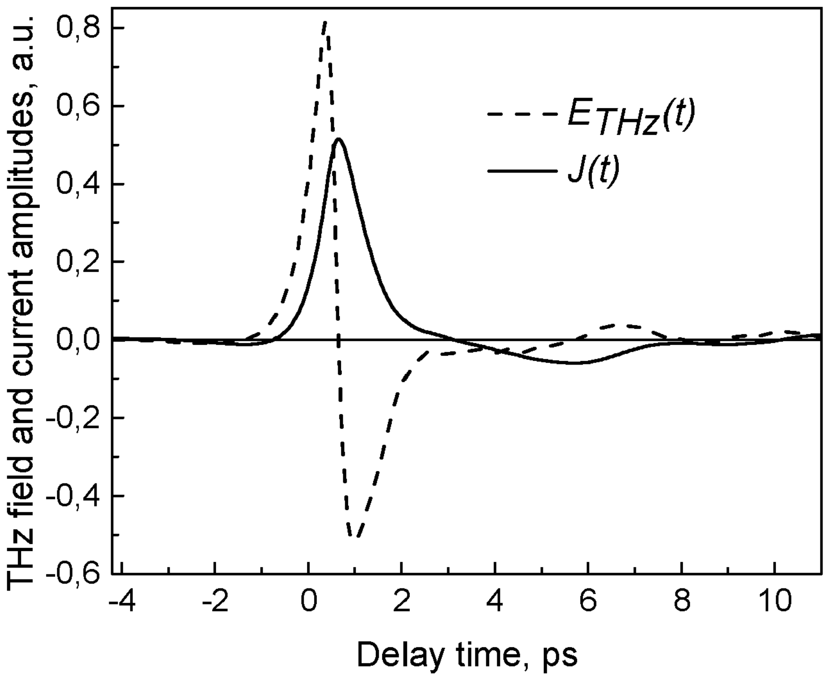
THz field and current amplitudes, a.u.
0,8
0,6
0,4
0,2
0,0
-0,2
-0,4
-0,6
-4
-2
0
2
4
6
8
10
Delay time, ps
E THz(t)
J(t)

Fig.3

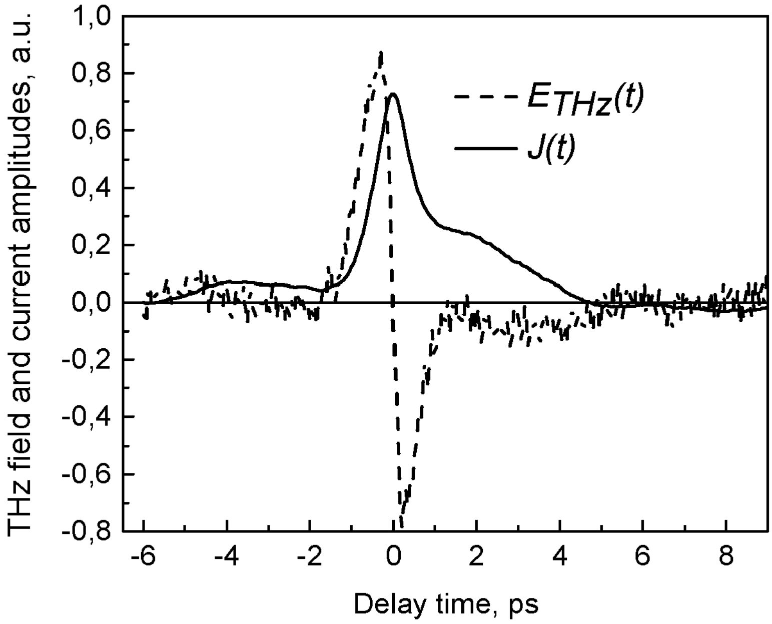
THz field and current amplitudes, a.u.
1,0
0,8
0,6
0,4
0,2
0,0
-0,2
-0,4
-0,6
-0,8
-6
-4
-2
0
2
4
6
8
Delay time, ps
$E_{THz}(t)$
J(t)

Fig.4

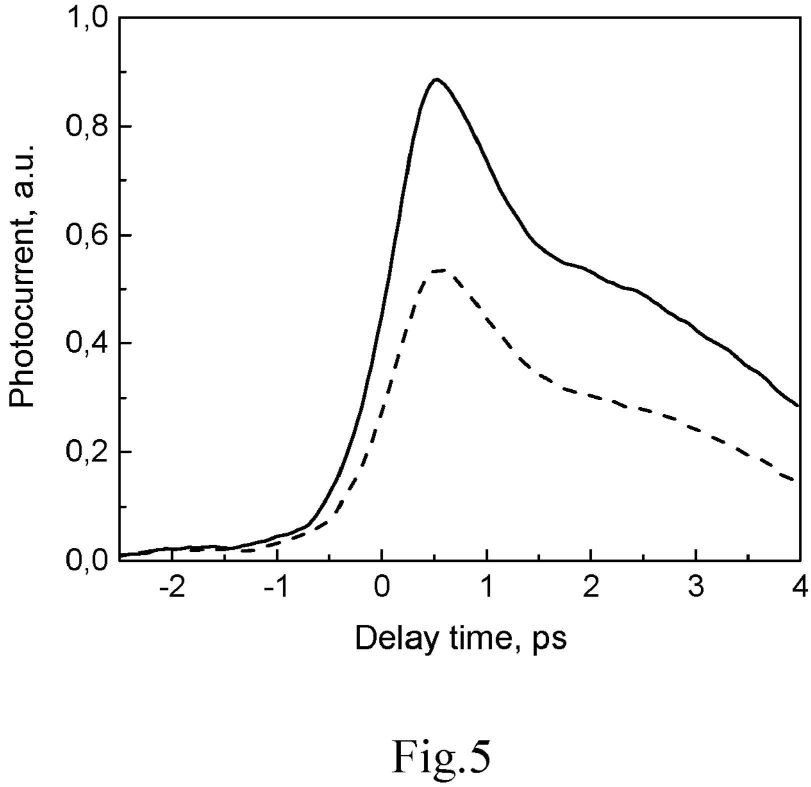
Photocurrent, a.u.
1,0
0,8
0,6
0,4
0,2
0,0
-2
-1
0
1
2
3
4
Delay time, ps

Fig.5

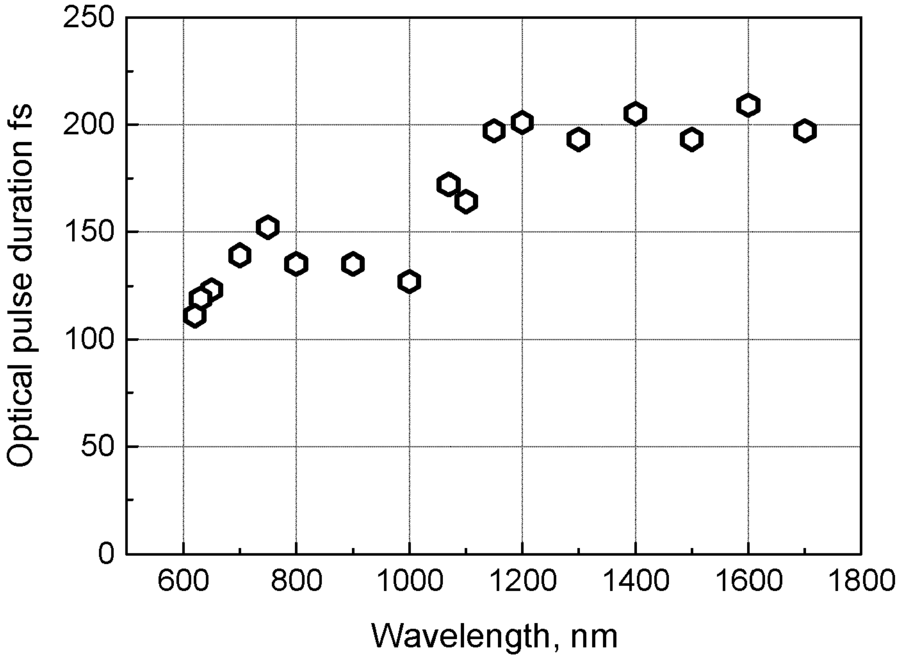
250
200
150
100
50
0
600
800
1000
1200
1400
1600
1800
Optical pulse duration fs
Wavelength, nm

Fig. 6

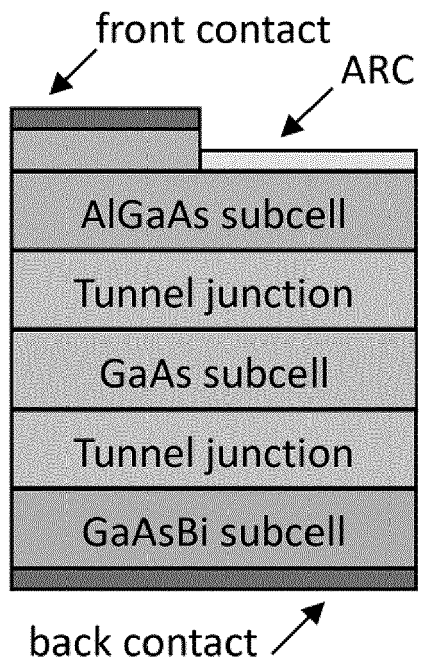
front contact
ARC
AlGaAs subcell
Tunnel junction
GaAs subcell
Tunnel junction
GaAsBi subcell
back contact

Fig.7

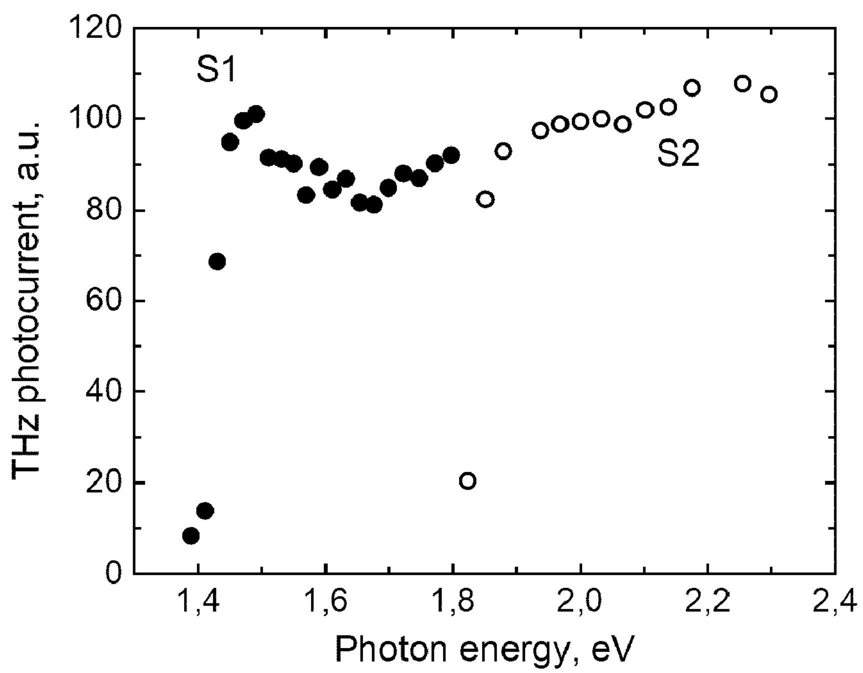
THz photocurrent, a.u.
120
100
80
60
40
20
0
S1
S2
1,4
1,6
1,8
2,0
2,2
2,4
Photon energy, eV

Fig. 8

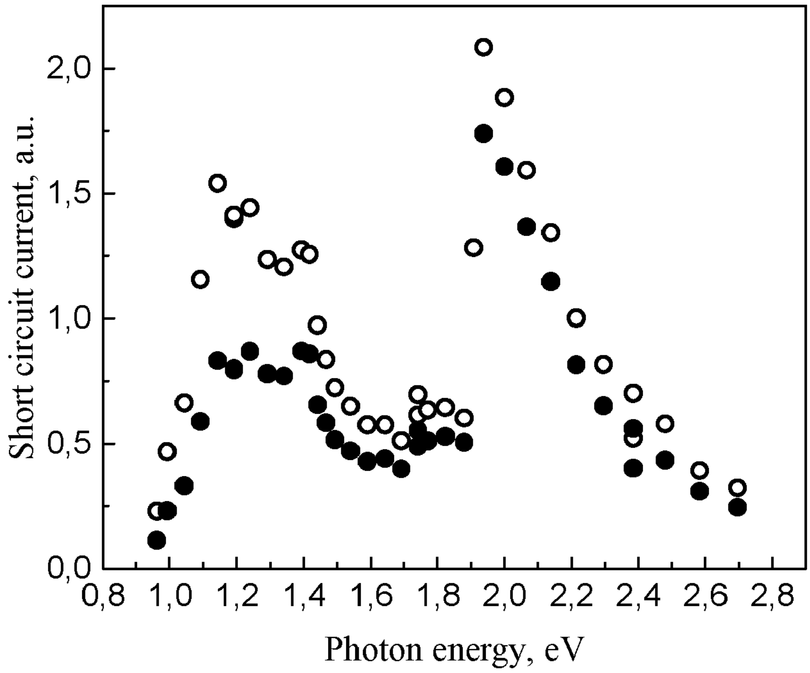
Short circuit current, a.u.
2,0
1,5
1,0
0,5
0,0
0,8 1,0 1,2 1,4 1,6 1,8 2,0 2,2 2,4 2,6 2,8
Photon energy, eV

Fig. 9

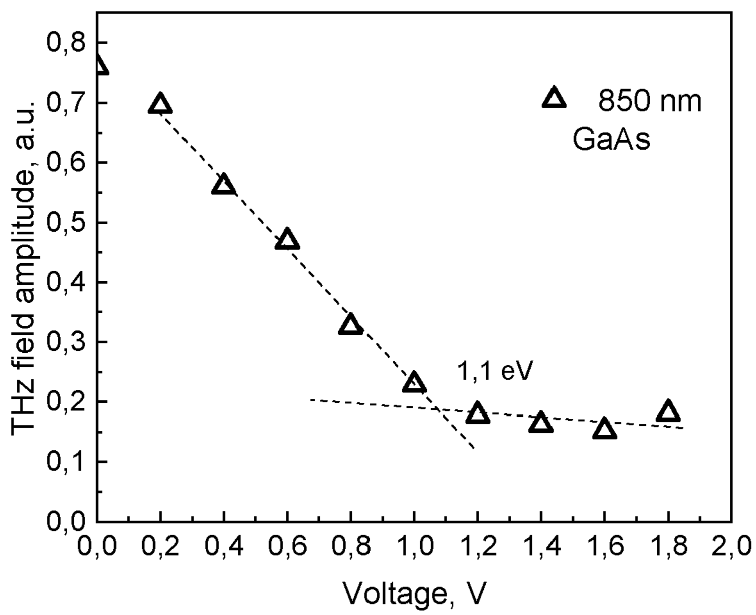
THz field amplitude, a.u.
0,8
0,7
0,6
0,5
0,4
0,3
0,2
0,1
0,0
850 nm
GaAs
1,1 eV
0,0 0,2 0,4 0,6 0,8 1,0 1,2 1,4 1,6 1,8 2,0
Voltage, V

Fig. 10

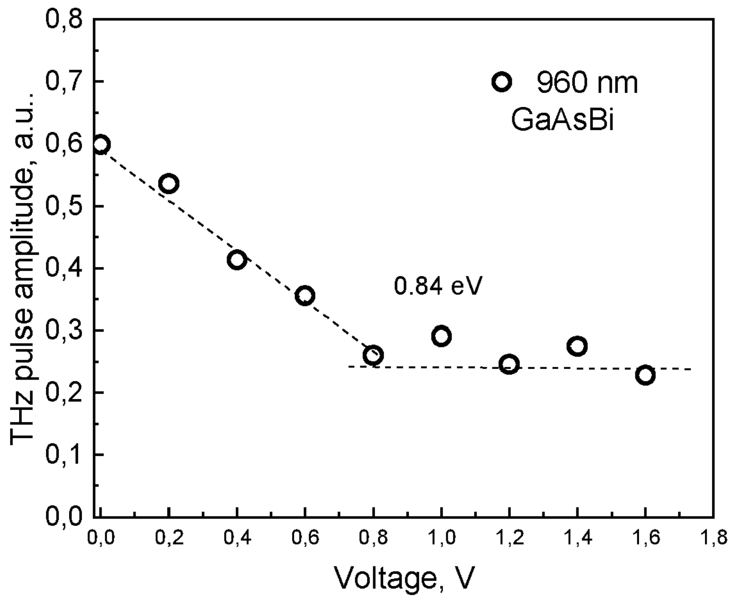

0,8
0,7
0,6
0,5
0,4
0,3
0,2
0,1
0,0
THz pulse amplitude, a.u..
960 nm
GaAsBi
0.84 eV
0,0
0,2
0,4
0,6
0,8
1,0
1,2
1,4
1,6
1,8
Voltage, V


Fig. 11

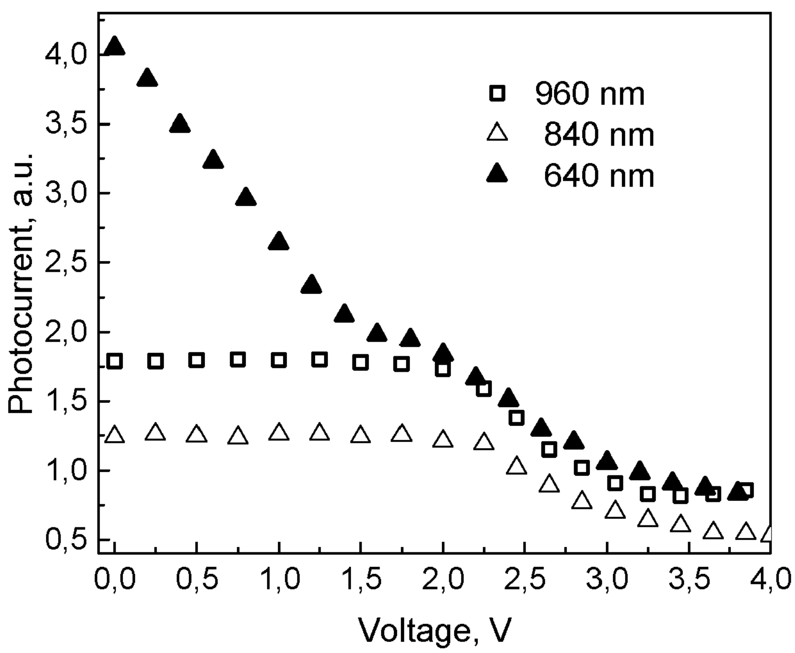

4,0
3,5
3,0
2,5
2,0
1,5
1,0
0,5
Photocurrent, a.u.
960 nm
840 nm
640 nm
0,0
0,5
1,0
1,5
2,0
2,5
3,0
3,5
4,0
Voltage, V


Fig. 12

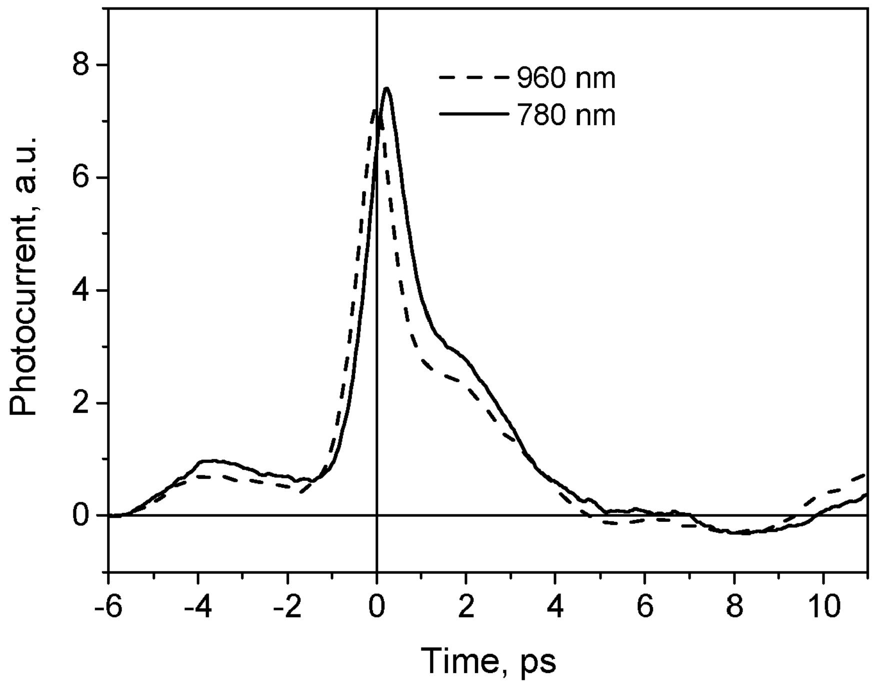
960 nm
780 nm
Photocurrent, a.u.
Time, ps
8
6
4
2
0
-6
-4
-2
0
2
4
6
8
10

Fig. 13

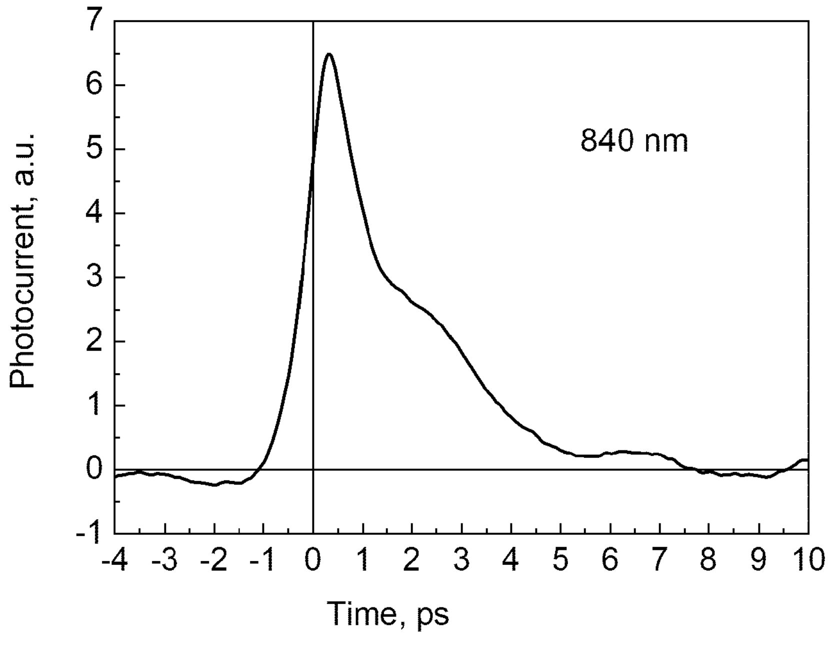
840 nm
Photocurrent, a.u.
Time, ps
7
6
5
4
3
2
1
0
-1
-4
-3
-2
-1
0
1
2
3
4
5
6
7
8
9
10

Fig. 14

Europäisches Patentamt
European Patent Office
Office européen des brevets

# EUROPEAN SEARCH REPORT

Application Number
EP 23 16 9639

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>A | US 2015/162872 A1 (NAKANISHI HIDETOSHI [JP] ET AL) 11 June 2015 (2015-06-11)<br>* paragraphs [0034] - [0096]; claims 1-3; figures 1,2 *<br>----- | 2<br><br>1 | INV.<br>H02S50/15 |
| A | US 2011/246109 A1 (FAFARD SIMON [CA]) 6 October 2011 (2011-10-06)<br>* paragraphs [0061] - [0119]; claims 1-14; figures 1,2,29-31 *<br>----- | 1,2 | |
| | | | TECHNICAL FIELDS SEARCHED (IPC) |
| | | | H02S |

The present search report has been drawn up for all claims

1

| Place of search | Date of completion of the search | Examiner |
|---|---|---|
| The Hague | 17 October 2023 | Boero, Mauro |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 23 16 9639

This annex lists the patent family members relating to the patent documents cited in the above-mentioned European search report.
The members are as contained in the European Patent Office EDP file on
The European Patent Office is in no way liable for these particulars which are merely given for the purpose of information.

17-10-2023

| Patent document cited in search report | Publication date | Patent family member(s) | Publication date |
|---|---|---|---|
| US 2015162872 A1 | 11-06-2015 | JP 6418542 B2 | 07-11-2018 |
| | | JP 2015114145 A | 22-06-2015 |
| | | US 2015162872 A1 | 11-06-2015 |
| US 2011246109 A1 | 06-10-2011 | US 2011246109 A1 | 06-10-2011 |
| | | US 2012004868 A1 | 05-01-2012 |
| | | WO 2012162790 A1 | 06-12-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 9450536 B2
- DE 102010056098 B3


### Non-patent literature cited in the description


- **S. W. LIM et al.** Analysis of spectral photocurrent response from multi-junction solar cells under variable voltage bias. *2010 35th IEEE Photovoltaic Specialists Conference,* 000712-000716